# EUROPÄISCHE PATENTSCHRIFT

(11) **EP 1 021 385 B1**
(45) Veröffentlichungstag und Bekanntmachung des Hinweises auf die Patenterteilung: **09.10.2002**
(21) Anmeldenummer: 98941358.8
(22) Anmeldetag: 18.07.1998
(51) Int. Cl.: C04B 35/01, C04B 35/103, C04B 35/106, C04B 35/482, C04B 35/66

(54) **KUNSTHARZGEBUNDENES FEUERFESTES VERSCHLEISSTEIL**
REFRACTORY, ARTIFICIAL RESIN-BONDED WEAR PART
ELEMENT D'USURE REFRACTAIRE, LIE PAR UNE RESINE SYNTHETIQUE

(30) Priorität: 20.09.1997 DE 19741550
(43) Veröffentlichungstag der Anmeldung: 26.07.2000
(73) Patentinhaber: DIDIER-WERKE AG, 65189 Wiesbaden (DE)
(72) Erfinder: SHERRIFF, Robert, D-55218 Ingelheim (DE); LÜHRSEN, Ernst, D-65307 Bad Schwalbach (DE); SCHULER, Andreas, D-65232 Taunusstein (DE); SCHMID, Thomas, D-65346 Eltville (DE); WIESEL, Martin, D-65189 Wiesbaden (DE)
(74) Vertreter: Becker, Thomas, Dr., Dipl.-Ing.
(86) Internationale Anmeldenummer: EP9804470
(87) Internationale Veröffentlichungsnummer: WO99015476

(56) Entgegenhaltungen:
- EP-A- 0 323 010
- EP-A- 0 418 573
- US-A- 4 407 972
- US-A- 4 506 022
- US-A- 5 250 479
- US-A- 5 660 948

## Beschreibung

Die Erfindung betrifft ein kunstharzgebundenes, feuerfestes Verschleißteil für sekundärmetallurgische Anwendungen.

Im Speziellen betrifft die Erfindung ein solches Verschleißteil auf Basis eines oxidischen Matrixmaterials in Kombination mit einem Kohlenstoffträger.

In der DE 36 28 055 C2 wird ein Verfahren zur Herstellung von feuerfesten Platten auf Basis Aluminiumoxid/Kohlenstoff für Schieberverschlüsse beschrieben.

Es wird darauf hingewiesen, daß derartige Platten einer erheblichen Temperatur-Wechselbeanspruchung und einem hohen erosiven Angriff ausgesetzt sind. Entsprechend wird eine hohe Temperaturwechselbeständigkeit und hohe Korrosionsbeständigkeit gefordert.

Konkret schlägt die DE 36 28 055 C2 ein Verfahren zur Herstellung derartiger Platten vor, die aus 50 bis 90 Gew.-% Aluminiumoxid sowie 5 bis 13 Gew.-% Kohlenstoff bestehen.

Der Kohlenstoff wird dabei in zwei Fraktionen unterteilt, nämlich 3 bis 8 Gew.-% Kohlenstoffpulver mit einer BET-Oberfläche von mehr als 50 m²/g und 2 bis 5 Gew.-% eines feinen Kohlenstoffpulvers, das von dem vorgenannten Kohlenstoffpulver verschieden ist.

Außerdem umfaßt der Versatz 2 bis 7 Gew.-% eines feinen Silicium-Pulvers, welches oxidationshemmend auf den Kohlenstoff wirkt.

Die Vorteile der bekannten Schieberplatte werden aus dem feinteiligen, leicht sinternden Aluminiumoxid abgeleitet, das es möglich machen soll, mehr Kohlenstoff ohne Probleme einzumischen. Das leicht zu sinternde feine Aluminiumoxidpulver soll zusammen mit dem feinen Kohlenstoffpulver und dem Kohlenstoff, der auf das Kunstharz-Bindemittel zurückgeht, den Raum zwischen den einzelnen Aluminiumoxidteilchen in der Größenordnung von Mikrometern ausfüllen. Auf diese Weise soll eine kompakte Struktur erreicht werden, die die Korrosionsbeständigkeit verbessert.

Eine kompakte Struktur schafft gleichzeitig aber Probleme bei der ebenfalls wichtigen Temperaturwechselbeständigkeit.

Die US 4,506,022 A offenbart einen Werkstoff für eine Schieberplatte aus 20-40 Gew.-% Aluminiumoxid-Korn, 2 bis 10 Gew.-% kohlenstoffhaltigem Material, 40-60 Gew.-% hochreinem Aluminiumoxid, 1 bis 5 Gew.-% Silicium und 3 bis 5 Gew.-% eines Harzes. Es wird darauf hingewiesen, daß erst Graphitgehalte von 5 bis 10 Gew.-% eine verbesserte Verschleißbeständigkeit schaffen (Spalte 3, Zeilen 8 bis 12). Daneben wird die Verwendung unterschiedlicher Aluminiumoxid-Materialien als wichtig beschrieben.

Die US 5,250,479 A beschreibt eine feuerfeste Zusammensetzung aus zahlreichen Einzelkomponenten. Antioxidantien für den Kohlenstoff werden in Mengen von 4 bis 13 Gew.-% eingesetzt. Der Kohlenstoffgehalt wird mit 6 bis 12 Gew.-% angegeben.

Aus der US 4,407,972 A ist ein feuerfestes Formteil bekannt, das 0,3 bis 30 % Kohlenstoff in einer Fraktion 0,01 bis 1 mm und 0,3 bis 10 % Magnesium enthält.

Die Erfindung geht nun einen völlig entgegengesetzten Weg und verringert den Kohlenstoffanteil innerhalb des feuerfesten Versatzes auf 1,0 bis 3,0 Gew.-%. Gleichzeitig wird als Kohlenstoffträger Graphit ausgewählt, der gegenüber anderen Kohlenstoffträgern, wie Ruß, eine verbesserte Oxidationsbeständigkeit und - aufgrund seiner Plättchenstruktur - eine bessere Gleitfähigkeit im Oberflächenbereich daraus hergestellter feuerfester Verschleißteile zeigt.

Der verringerte Kohlenstoffgehalt führt auch bei Oxidation des Kohlenstoffs zu einer verringerten Porosität, die nach einer Ausführungsform zwischen 10 und 16 Vol.-% (10 und 14 Vol.-%) betragen kann, wobei in Vorversuchen Werte unter 12 Vol.-% festgestellt werden konnten.

Die offene Porosität wurde dabei gemäß EN 993 Teil 1 ermittelt.

Der verringerte Graphitanteil bewirkt vor allem aber eine bessere Verschleißfestigkeit des feuerfesten Körpers. Kohlenstoff stellt üblicherweise in Hinblick auf das Verschleißverhalten einen Problemstoff dar, weil er durch seine Oxidation die Porosität erhöht und die Verschleißbeständigkeit reduziert.

Die Erosionsbeständigkeit kann zusätzlich dadurch gefördert werden, indem die Oberflächen der Verschleißteile geschliffen werden. Dies gilt insbesondere dann, wenn die erfindungsgemäßen Verschleißteile als Schieberplatten gestaltet sind.

Das oxidische Matrixmaterial kann aus Tabulartonerde, calcinierter Tonerde, Zirkoniumdioxid, Zirkonmullit, einzeln oder in Kombination stehen.

Der vorgenannte Versatz kann daneben auch geringe Mengen (bis etwa 3 Gew.-%) sonstige feuerfeste Komponenten enthalten.

Die spezifische Oberfläche (BET-Oberfläche) des vorzugsweise synthetischen Graphits beträgt nach verschiedenen Ausführungsformen zwischen 15 und 26 m²/g beziehungsweise zwischen 20 und 24 m²/g, die Teilchengröße üblicherweise 1,0 - 10,0 µm.

Der Graphitanteil kann auf einen Bereich von 1,5 bis 2,5 Gew.-%, bezogen auf den Versatz, eingeschränkt werden.

Wie vorstehend ausgeführt wird die feuerfeste Masse mittels eines Kunstharzes gebunden. Sein Mengenanteil beträgt (je 100 Gew.-Teile des feuerfesten Versatzes) zwischen 3 und 8 Gew.-Teilen, wobei 4 bis 5 Gewichtsteile üblich sind. Nach der Verkokung des Kunstharzes berechnet sich hieraus ein Rest-Kohlenstoff von etwa der Hälfte, also 2 bis 2,5 Gew.-Teilen, so daß der Gesamt-Kohlenstoffgehalt des gebrannten Verschleißteils zwischen 3,5 und 5 Gew.-% beträgt.

In Vorversuchen wurde ermittelt, daß ein Graphitanteil zwischen 1,8 und 2,2 Gew.-% (neben dem genannten Kunstharz-Anteil) die Einmischung der Komponenten besonders fördert.

Zu geringe Graphit-Anteile machen es nahezu unmöglich, das Kunstharz, beispielsweise Phenolharz, unterzumischen. Zu hohe Graphitanteile fördern die Oxidationsgefahr und erhöhen die Porosität und Verschleißanfälligkeit drastisch.

Das oxidationshemmende Zusatzmittel kann beispielsweise aus Siliciummetall bestehen, welches den Kohlenstoff unter Bildung von SiC bindet.

Im Gegensatz zum Stand der Technik (DE 36 28 055 C2) kann das oxidische Matrixmaterial im Versatz eine konventionelle Korngröße aufweisen, üblicherweise zwischen 2 µm und 4,0 mm.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert, welches einer Referenzprobe nach dem Stand der Technik gegenübergestellt wird.

Ausgegangen wird beim erfindungsgemäßen Versatz 1 ebenso wie beim Versatz 2 nach dem Stand der Technik von einer Mischung aus 94 Gew.-% aluminiumoxidhaltigem Matrixmaterial, überwiegend in Form von Tabulartonerde im Kornbereich 5 µm bis 3,0 mm.

Beide Versätze enthalten außerdem jeweils 4 Gew.-% Si-Metall als oxidationshemmendes Zusatzmittel.

Zur Ergänzung auf jeweils 100 Gew.-% sind dem erfindungsgemäßen Versatz 1 2 Gew.-% Graphit mit einer BET-Oberfläche von 22 m²/g (bei einem mittleren Korndurchmesser d₅₀ von etwa 3 µm) und dem Referenzversatz 2 Gew.% Ruß mit einer BET-Oberfläche von 30 m²/g zugemischt und die Versätze jeweils mit 5 Gew.-% Phenolharz ergänzt worden.

Während die Rohdichte des aus Versatz 1 gebildeten Körpers mit 2,99 g/cm³ ermittelt wurde ergab sich für den Körper aus Versatz 2 ein Wert von 3,11 g/cm³.

Im Einsatz wurde für die aus Versatz 1 hergestellte Schieberplatte eine Haltbarkeit von 7 Chargen, für die aus Versatz 2 hergestellte Schieberplatte eine Haltbarkeit von 6 Chargen ermittelt.

Neben der insoweit erhöhten Haltbarkeit zeigt die erfindungsgemäß hergestellte Schieberplatte auch einen optisch deutlich verbesserten Gesamtzustand.

## Patentansprüche

1. Kunstharzgebundenes, feuerfestes Verschleißteil für sekundärmetallurgische Anwendungen, aus:
90 bis 97 Gew.-% eines oxidischen Matrixmaterials,
1,0 bis 3,0 Gew.-% Graphit mit einer BET-Oberfläche zwischen 10 und 30 m²/g
≤ 4,0 Gew.-% eines, die Oxidation von Graphit hemmenden Zusatzmittels.

2. Verschleißteil nach Anspruch 1, bei dem das oxidische Matrixmaterial aus Tabulartonerde, calcinierter Tonerde, Zirkoniumdioxid, Zirkonmullit, einzeln oder in Kombination besteht.

3. Verschleißteil nach Anspruch 1, bei dem der Graphit eine BET-Oberfläche zwischen 15 und 26 m²/g aufweist.

4. Verschleißteil nach Anspruch 3, bei dem der Graphit eine BET-Oberfläche zwischen 20 und 24 m²/g aufweist.

5. Verschleißteil nach Anspruch 1, bei dem der Graphitanteil 1,5 bis 2,5 Gew.-% beträgt.

6. Verschleißteil nach Anspruch 5, bei dem der Graphitanteil 1,8 bis 2,2 Gew.-% beträgt.

7. Verschleißteil nach Anspruch 1, bei dem das oxidationshemmende Zusatzmittel aus Silicium-Metall besteht.

8. Verschleißteil nach Anspruch 1, bei dem das oxidische Matrixmaterial im Versatz eine Korngröße zwischen 1,0 µm und 4,0 mm aufweist.

9. Verschleißteil nach Anspruch 1, mit einem Kunstharzanteil zwischen 3 und 8 Gew.-Teilen je 100 Gew.-Teile oxidisches Matrixmaterial, Graphit und oxidationshemmendes Zusatzmittel.

10. Verschleißteil nach Anspruch 1, bei dem das Kunstharz ein Phenolharz ist.

11. Verschleißteil nach Anspruch 1, bei dem der Graphit ein synthetischer Graphit ist.

12. Verschleißteil nach Anspruch 1 mit einer offenen Porosität (nach Brand) zwischen 10 und 16 Vol.-%.

13. Verschleißteil nach Anspruch 12 mit einer offenen Porosität (nach Brand) zwischen 10 und 14 Vol.-%.

14. Verwendung eines Verschleißteiles nach einem der Ansprüche 1 bis 13 als Schieberplatte in Schieberverschlüssen.

## Claims

1. Resin bonded, refractory wear part for secondary metallurgical applications comprising:
90 to 97 wt.% of an oxide matrix material,
1.0 to 3.0 wt.% graphite with a BET surface area between 10 and 30 m²/g
≤ 4.0 wt.% of an additive which inhibits the oxidation of graphite.

2. Wear part as claimed in Claim I in which the oxide matrix material comprises tabular alumina, calcined alumina, zirconia or zircon-mullite, individually or in combination.

3. Wear part as claimed in Claim 1, in which the graphite has a BET surface area between 15 and 26 m²/g.

4. Wear part as claimed in Claim 3 in which the graphite has a BET surface area between 20 and 24 m²/g.

5. Wear part as claimed in Claim 1 in which the graphite content is 1.5 to 2.5 wt.%.

6. Wear part as claimed in Claim 5 in which the graphite content is 1.8 to 2.2 wt.%.

7. Wear part as claimed in Claim 1 in which the oxidation-inhibiting additive comprises silicon metal.

8. Wear part as claimed in Claim 1 in which the oxide matrix material in the mixture has a grain size between 1.0 µm and 4.0 mm.

9. Wear part as claimed in Claim 1 with a resin content between 3 and 8 parts by wt. per 100 parts by wt. oxide matrix material, graphite and oxidation-inhibiting additive.

10. Wear part as claimed in Claim 1 in which the resin is a phenol resin.

11. Wear part as claimed in Claim 1 in which the graphite is a synthetic graphite.

12. Wear part as claimed in Claim 1 with an open porosity (after firing) between 10 and 16 vol.%.

13. Wear part as claimed in Claim 12 with an open porosity (after firing) between 10 and 14 vol.%.

14. Use of a wear part as claimed in one of Claims 1 to 13 as a sliding plate in sliding gate valves.

## Revendications

1. Elément d'usure réfractaire lié par une résine synthétique pour des applications métallurgiques secondaires, composé de :
90 à 97 % en poids d'un matériau de matrice à base d'oxyde
1,0 à 3,0 % en poids de graphite avec une surface spécifique BET comprise entre 10 et 30 m²/g
≤4,0 % en poids d'un additif inhibant l'oxydation du graphite.

2. Elément d'usure selon la revendication 1, pour lequel le matériau de matrice à base d'oxyde est de l'argile bis-cuite frittée, de l'argile calcinée, du dioxyde de zirconium, de la zirconomullite, pris séparément ou en combinaison.

3. Elément d'usure selon la revendication 1, pour lequel le graphite a une surface BET comprise entre 15 et 26 m²/g.

4. Elément d'usure selon la revendication 3, pour lequel le graphite a une surface BET comprise entre 20 et 24 m²/g.

5. Elément d'usure selon la revendication 1, pour lequel la proportion de graphite est comprise entre 1,5 et 2,5 % en poids.

6. Elément d'usure selon la revendication 5, pour lequel la proportion de graphite est comprise entre 1,8 et 2,2 % en poids.

7. Elément d'usure selon la revendication 1, pour lequel l'additif inhibant l'oxydation consiste en du silicium métallique.

8. Elément d'usure selon la revendication 1, pour lequel le matériau de matrice à base d'oxyde a une granulométrie comprise entre 1,0 µm et 4,0 mm.

9. Elément d'usure selon la revendication 1 avec une proportion pondérale de résine synthétique comprise entre 3 et 8 parts pour 100 parts en poids de matériau de matrice à base d'oxyde, de graphite et d'additif inhibant l'oxydation.

10. Elément d'usure selon la revendication 1, pour lequel la résine synthétique est une résine phénolique.

11. Elément d'usure selon la revendication 1, pour lequel le graphite est un graphite synthétique.

12. Elément d'usure selon la revendication 1 avec une porosité ouverte (selon Brand) comprise entre 10 et 16 % en volume.

13. Elément d'usure selon la revendication 12 avec une porosité ouverte (selon Brand) comprise entre 10 et 14 % en volume.

14. Utilisation d'un élément d'usure selon une des revendications 1 à 13 comme plateau coulissant dans des obturateurs à plateau coulissant.
